# EUROPÄISCHE PATENTSCHRIFT

(11) **EP 2 950 366 B1**
(45) Veröffentlichungstag und Bekanntmachung des Hinweises auf die Patenterteilung: **07.11.2018**
(21) Anmeldenummer: 15166290.5
(22) Anmeldetag: 04.05.2015
(51) Int. Cl.: H01M 2/10, H01M 2/20, H01M 10/6567

(54) **BATTERIEEINHEIT MIT EINER MEHRZAHL VON BATTERIEZELLEN SOWIE BATTERIEMODUL MIT EINER MEHRZAHL SOLCHER BATTERIEEINHEITEN**
BATTERY UNIT WITH A PLURALITY OF BATTERY CELLS AND BATTERY MODULE WITH A PLURALITY OF SUCH BATTERY UNITS
UNITÉ DE BATTERIE DOTÉE D'UNE PLURALITÉ DE CELLULES DE BATTERIE ET MODULE DE BATTERIE DOTÉ D'UNE PLURALITÉ DE TELLES UNITÉS DE BATTERIES

(30) Priorität: 27.05.2014 DE 102014210097
(43) Veröffentlichungstag der Anmeldung: 02.12.2015
(73) Patentinhaber: ROBERT BOSCH GMBH, 70442 Stuttgart (DE)
(72) Erfinder: Kretschmar, Thomas, 96050 Bamberg (DE); Hore, Sarmimala, 70174 Stuttgart (DE); Reinshagen, Holger, 96052 Bamberg (DE); Kegel, Timo, 96117 Memmelsdorf (DE); Grasser, Andreas, 96182 Reckendorf (DE)

(56) Entgegenhaltungen:
- EP-A1- 2 913 867
- DE-A1- 10 352 046
- US-B1- 6 224 997

## Beschreibung

Die Erfindung betrifft eine Batterieeinheit umfassend eine Mehrzahl von Batteriezellen mit jeweils einer ersten Elektrode und einer zweiten Elektrode zur elektrischen Kontaktierung der jeweiligen Batteriezelle, wobei die Batteriezellen über Zellverbinder elektrisch miteinander verschaltet sind und die miteinander verschalteten Batteriezellen von einer die Batteriezellen zusammenhaltenden Außenhülle umgeben sind.

Des Weiteren betrifft die Erfindung ein Batteriemodul mit einer Mehrzahl von elektrisch miteinander verschalteten Batterieeinheiten.

### Stand der Technik

Batterieeinheiten mit einer Mehrzahl von elektrisch miteinander verschalteten elektrochemischen Zellen sind in unterschiedlichen Ausgestaltungen im Stand der Technik bekannt. Darüber hinaus sind Batteriemodule bekannt, welche eine Mehrzahl von miteinander verschalteten Batteriezellen aufweisen, wobei die Batteriezellen häufig in einem Gehäuse als Außenhülle angeordnet sind. Insbesondere aufgrund der hohen Energiedichte werden als Batteriezellen vorzugsweise Lithium-Ionen-Zellen eingesetzt. Lithium-Ionen-Zellen können insbesondere als sogenannte Rundzellen, als prismatische Zellen oder als sogenannte Pouch-Zellen ausgebildet sein.

Aus der Druckschrift EP 2 202 824 A1 ist beispielsweise ein Batteriemodul mit einer Mehrzahl von Batteriezellen bekannt, wobei die Batteriezellen eine erste Elektrode und eine zweite Elektrode aufweisen. Das in dieser Druckschrift offenbarte Batteriemodul umfasst darüber hinaus als Außenhülle eine Aufnahmeeinrichtung mit nebeneinander angeordneten Aufnahmeeinheiten, in welche Batteriezellen eingebracht sind. Die Aufnahmeeinrichtung weist dabei einen ersten Gehäuseteil mit einem ersten Anschlussterminal und einen zweiten Gehäuseteil mit einem zweiten Anschlussterminal zur Kontaktierung der Elektroden der Batteriezellen auf. Darüber hinaus offenbart diese Druckschrift, mehrere solcher Batteriemodule elektrisch miteinander zu verschalten.

Nachteile bei im Stand der Technik bekannten Batterieeinheiten und Batteriemodulen bestehen insbesondere in Bezug auf das Anordnen in einem Einbauraum der elektrischen Verbrauchereinrichtung, welche mit der von der Batterieeinheit beziehungsweise von dem Batteriemodul bereitgestellten elektrischen Energie betrieben werden soll.

Insbesondere bei Hybrid-, Plug-In-Hybrid- oder Elektrofahrzeugen besteht zudem die Schwierigkeit, dass der Einbauraum, welcher für die zur Bereitstellung der elektrischen Energie erforderlichen Batterieeinheiten und Batteriemodule vorzusehen ist, den Nutzraum für die Passagiere und das Gepäck möglichst nicht beeinträchtigen sollen. Darüber hinaus besteht die weitere Schwierigkeit, eine ungünstige Gewichtsverteilung beim Fahrzeug durch die eingesetzten Batterieeinheiten beziehungsweise Batteriemodule möglichst zu vermeiden.

Vor diesem Hintergrund ist es eine Aufgabe der Erfindung, eine im Hinblick auf die vorgenannten Nachteile verbesserte Batterieeinheit sowie ein verbessertes Batteriemodul bereitzustellen. Insbesondere soll eine Batterieeinheit bereitgestellt werden, welche verbessert an unterschiedlich ausgestaltete Einbauräume angepasst werden kann.

### Offenbarung der Erfindung

Zur Lösung der Aufgabe wird eine Batterieeinheit gemäß Anspruch 1 vorgeschlagen, umfassend eine Mehrzahl von Batteriezellen mit jeweils einer ersten Elektrode und einer zweiten Elektrode zur elektrischen Kontaktierung der jeweiligen Batteriezelle, wobei die Batteriezellen über Zellverbinder elektrisch miteinander verschaltet sind und die miteinander verschalteten Batteriezellen von einer die Batteriezellen zusammenhaltenden Außenhülle umgeben sind, wobei die Zellverbinder zumindest einen flexibel ausgebildeten Abschnitt aufweisen und die Außenhülle zumindest teilweise flexibel ausgebildet ist, derart, dass die Batterieeinheit durch eine Veränderung einer relativen Anordnung der Batteriezellen zueinander formbar ist. Das heißt, dass insbesondere der Winkel von zwei hintereinander geschalteten Batteriezellen zueinander veränderbar ist, sodass vorteilhafterweise die Batterieeinheit derart geformt werden kann, dass die Batterieeinheit einen oder mehrere Bögen aufweist. Hierdurch ist die Batterieeinheit vorteilhafterweise besonders gut an unterschiedliche Einbauräume anpassbar, wodurch vorteilhafterweise eine Unterbringung einer erfindungsgemäßen Batterieeinheit in einem Fahrzeug erleichtert wird, insbesondere da die erfindungsgemäße Batterieeinheit es ermöglicht, die Batterieeinheit um Ecken zu führen.

Die Außenhülle der Batterieeinheit ist vorteilhafterweise aus einem flexiblen elektrisch Isolierend Kunststoff ausgebildet. Insbesondere ist vorgesehen, dass das Material der Außenhülle elastisch rückstellend ausgebildet ist. Als Zellverbinder mit zumindest einem flexibel ausgebildeten Abschnitt sind insbesondere Leitungsdrähte oder Leitungsbänder vorgesehen. Insbesondere ist vorgesehen, dass die Außenhülle an den Batteriezellen anliegt.

Als Batteriezellen sind insbesondere sekundäre Batteriezellen, das heißt nachladbare Akkumulatorzellen, vorgesehen, besonders bevorzugt Lithium-Ionen-Zellen.

Gemäß einer vorteilhaften Ausgestaltung der Erfindung ist vorgesehen, dass die Zellverbinder wenigstens eine Sollbiegestelle als den zumindest einen flexiblen Abschnitt aufweisen. Insbesondere ist vorgesehen, dass ein Zellverbinder als metallisch leitfähiger Streifen (z.B. Kupfer, Aluminium, Nickel oder Eisenwerkstoffe - sowie deren Legierungen) ausgebildet ist, welcher wenigstens eine solche Sollbiegestelle aufweist. Um die Sollbiegestelle ist der Zellverbinder vorteilhafterweise scharnierartig verschwenkbar. Durch die Anzahl der Sollbiegestellen sowie die Anordnung der Sollbiegestellen an dem Zellverbinder ist vorteilhafterweise die Formbarkeit der Batterieeinheit vorgebbar. Die Zellverbinder sind vorzugsweise mit den Elektroden der Batteriezellen, welche die Zellverbinder elektrisch leitfähig miteinander verbinden, verbunden, vorzugsweise verschweißt. Die Zellverbinder ermöglichen es vorteilhafterweise miteinander über den Zellverbinder verschaltete Batteriezellen relativ zueinander zu bewegen, insbesondere derart, dass der Winkel von zwei hintereinander geschalteten Batteriezellen zueinander variierbar ist.

Gemäß einer bevorzugten Ausgestaltung der erfindungsgemäßen Batterieeinheit ist die Außenhülle schlauchartig ausgebildet. Insbesondere ist als Außenhülle ein flexibler Kunststoff-Hüllschlauch vorgesehen. Die schlauchartige Ausbildung der Außenhülle erleichtert dabei vorteilhafterweise die Formbarkeit der Batterieeinheit und verbessert vorteilhafterweise das Anordnen der Batterieeinheit in engen gewundenen Einbauräumen. Darüber hinaus sind erfindungsgemäß ausgebildete Batterieeinheiten hierdurch weiter verbessert derart in einem Fahrzeug anordbar, dass eine bessere Gewichtsverteilung erzielt werden kann.

Gemäß einer weiteren besonders bevorzugten Ausgestaltung der erfindungsgemäßen Batterieeinheit sind die Batteriezellen als Rundzellen ausgebildet, wobei die erste Elektrode und die zweite Elektrode jeweils an einander gegenüberliegenden Enden der Rundzelle angeordnet sind. Insbesondere bei einer schlauchartigen Ausbildung der Außenhülle ist hierbei vorteilhafterweise das Einbringen der Batteriezellen in die Außenhülle vereinfacht.

Gemäß einer weiteren vorteilhaften Ausgestaltung der erfindungsgemäßen Batterieeinheit ist vorgesehen, dass die Batteriezellen jeweils einzeln hintereinandergeschaltet sind. Hierdurch ist vorteilhafterweise die Formbarkeit der Batterieeinheit weiter verbessert. Insbesondere kann vorgesehen sein, dass die Außenhülle Abzweigungen aufweist, wobei jede Abzweigung schlauchartig ausgebildet ist, und in jeder Abzweigung Batteriezellen angeordnet sind. Hierdurch sind vorteilhafterweise weiter verbessert enge Einbauräume nutzbar, sowie das Gewicht der Batterieeinheit in einem Fahrzeug vorteilhafterweise besser verteilbar, was vorteilhafterweise zu einem verbesserten Fahrverhalten des Fahrzeugs beiträgt.

Die erfindungsgemäßen Batterieeinheit sieht vor, dass die Außenhülle wenigstens einen Kühlmittelleitungskanal aufweist. Der Kühlmittelleitungskanal ist dabei in die Außenhülle eingebracht. Über den Kühlmittelleitungskanal ist vorteilhafterweise eine Temperierung der Batteriezellen bereitgestellt, sodass die Batteriezellen vorteilhafterweise in einem optimalen Temperaturbereich betrieben werden können. Hierdurch wird vorteilhafterweise die Batterielebensdauer verlängert und ein sicheres Betreiben der Batteriezellen weiter verbessert. Insbesondere wenn Batteriezellen einzeln hintereinander in die Außenhülle eingebracht sind, ist vorteilhafterweise eine besonders gute Temperierung der Batteriezellen ermöglicht, da jede Batteriezelle mit dem wenigstens einen Kühlmittelleitungskanal vorteilhafterweise thermisch kontaktiert ist.

Insbesondere ist vorgesehen, dass die Außenhülle beziehungsweise der wenigstens eine Kühlmittelleitungskanal der Außenhülle ausgebildet ist, an ein Kühlsystem angeschlossen zu werden. Als Kühlmittel ist insbesondere ein flüssiges Kühlmittel, vorzugsweise ein Wasser-Glykol-Gemisch oder ein Kältemittel, beispielsweise das Kältemittel R1234yf, vorgesehen. Dabei ist einerseits vorgesehen, dass die Batteriezellen bei hohen Umgebungstemperaturen mittels eines durch den wenigstens einen Kühlmittelleitungskanal strömenden Kühlmittels gekühlt werden können. Andererseits ist vorgesehen, dass die in der Außenhülle angeordneten Batteriezellen durch ein durch den wenigstens einen Kühlmittelleitungskanal strömendes Kühlmittel erwärmt werden können, insbesondere bei niedrigen Umgebungstemperaturen.

Als weitere vorteilhafte Ausgestaltungsvariante einer erfindungsgemäßen Batterieeinheit ist vorgesehen, dass die Außenhülle eine Temperiervorrichtung aufweist, insbesondere eine Heizwendel, wobei mittels der Heizwendel ein Erwärmen der Batteriezellen bei niedrigen Umgebungstemperaturen durch einen entsprechenden Stromfluss durch die Heizwendel ermöglicht ist.

Gemäß einer weiteren vorteilhaften Ausgestaltung der Erfindung weist die Außenhülle wenigstens zwei in Längserstreckungsrichtung der Außenhülle verlaufende Segmente auf, welche vorteilhafterweise als Kühlmittelleitungskanal ausgebildet sind, wobei wenigstens ein erster Kühlmittelleitungskanal als Kühlmittelhinführung und wenigstens ein zweiter Kühlmittelleitungskanal als Kühlmittelrückführung ausgebildet ist. Hierdurch ist vorteilhafterweise eine homogene Temperierung der Batteriezellen weiter verbessert.

Die Erfindung sieht vor, dass die Außenhülle eine Außenwandung und eine Innenwandung aufweist, wobei die Innenwandung eine höhere Elastizität aufweist als die Außenwandung, vorteilhafterweise derart, dass die Innenwandung durch den Druck eines zwischen den Wandungen strömenden Kühlmittels gegen die Batteriezellen gepresst wird. Hierdurch ist vorteilhafterweise die thermische Kontaktierung der Batteriezellen mit dem wenigstens einen Kühlmittelleitungskanal weiter verbessert. Darüber hinaus werden die Batteriezellen innerhalb der Außenhülle hierdurch vorteilhafterweise bessert stabilisiert.

Gemäß einer weiteren vorteilhaften Ausgestaltung der erfindungsgemäßen Batterieeinheit weist die Außenhülle mehrere Anordnungsräume auf, vorzugsweise schlauchartig ausgebildete Anordnungsräume, wobei die Batteriezellen in den Anordnungsräumen angeordnet sind. Dabei sind die einzelnen Batteriezellen vorzugsweise einzeln hintereinander geschaltet. Das heißt, dass einzelne Batteriezellen sich bei dieser Ausgestaltung nicht seitlich kontaktieren. Insbesondere ist vorgesehen, dass die Batteriezellen hierbei Rundzellen sind. Vorteilhafterweise ist bei dieser Ausgestaltung die Formbarkeit der Batterieeinheit bei Anordnung von mehreren Batteriezellen auch nebeneinander weiter verbessert. Vorzugsweise ist bei dieser Ausgestaltung zwischen den Anordnungsräumen wenigstens ein Kühlmittelleitungskanal zur Temperierung der Batteriezellen angeordnet. Insbesondere ist ferner vorgesehen, dass die Außenhülle einer erfindungsgemäßen Batterieeinheit Hohlräume für eine weiter verbesserte Formbarkeit der Batterieeinheit aufweist.

Eine weitere vorteilhafte Ausgestaltung der Erfindung sieht vor, dass die Außenhülle wenigstens eine elektrisch leitfähige Leitung umfasst, welche vorzugsweise in die Außenhülle integriert ist. Insbesondere ist vorgesehen, dass eine Kontaktierung von Batteriezellen über die wenigstens eine elektrisch leitfähige Leitung erfolgt, insbesondere um Batteriezellen weiter miteinander zu verschalten und/oder um wenigstens einen Betriebsparameter wenigstens einer Batteriezelle, wie insbesondere eine Batteriezellspannung und/oder eine Batteriezelltemperatur, zu erfassen. Die wenigstens eine elektrisch leitfähige Leitung kann somit insbesondere eine sogenannte Sense-Leitung sein.

Eine weitere vorteilhafte Ausgestaltung der erfindungsgemäßen Batterieeinheit sieht vor, dass jeweils zwischen einer bestimmten Anzahl von Batteriezellen eine Sicherheitsbarriere angeordnet ist. Eine solche Sicherheitsbarriere stellt vorteilhafterweise eine elektrisch leitfähige Verbindung zwischen den Batteriezellen, zwischen denen die Sicherheitsbarriere angeordnet ist, bereit, und ist vorteilhafterweise ausgebildet, eine thermische Kettenreaktion zwischen diesen Batteriezellen zu verhindern, falls es zu einem thermischen Durchgehen (engl.: thermal runaway) einer Batteriezelle kommen sollte. Dabei ist insbesondere vorgesehen, dass die Sicherheitsbarriere an deren Außenseiten jeweils eine Kontaktierungsfläche umfasst, welche über wenigstens ein elektrisch leitfähiges Verbindungselement elektrisch miteinander verbunden sind, sodass über diese Kontaktierungsflächen die durch diese Sicherheitsbarriere beabstandeten Batteriezellen elektrisch kontaktiert werden. Zwischen den Kontaktierungsflächen ist vorteilhafterweise ein schlecht oder nur gering wärmeleitendes Füllmaterial eingebracht. Vorteilhafterweise ist das Füllmaterial zudem als Temperaturabsorber ausgebildet, vorzugsweise über sogenannte phase change materials (pcm). Die elektrische Verbindung kann vorteilhafterweise durch das Füllmaterial hindurch und/oder um das Füllmaterial herum erfolgen, insbesondere als metallische Umkleidung der Sicherheitsbarriere oder als metallische Außenfläche der Sicherheitsbarriere. Gemäß einer weiteren vorteilhaften Ausgestaltung ist das wenigstens eine elektrisch leitfähige Verbindungselement als Stromunterbrechungseinrichtung (CID: Current Interrupt Device) ausgebildet, insbesondere als Schmelzdrahtsicherung.

Zur Lösung der eingangs genannten Aufgabe wird des Weiteren ein Batteriemodul mit einer Mehrzahl von elektrisch miteinander verschalteten Batterieeinheiten vorgeschlagen, wobei die Batterieeinheiten als erfindungsgemäße Batterieeinheiten ausgebildet sind. Insbesondere ist vorgesehen, dass die Batterieeinheit zur Bereitstellung der für den Betrieb eines Hybrid-, Plug-In-Hybrid- oder Elektrofahrzeugs erforderlichen elektrischen Energie ausgebildet ist. Insbesondere ist vorgesehen, dass das Batteriemodul ein Batteriemanagementsystem zur Regelung und/oder Überwachung des Betriebs der einzelnen Batterieeinheiten umfasst.

Weitere vorteilhafte Einzelheiten, Merkmale und Ausgestaltungsdetails der Erfindung werden im Zusammenhang mit den in den Figuren dargestellten Ausführungsbeispielen näher erläutert. Dabei zeigt:
- Fig. 1: in einer schematischen Darstellung einen Schnitt durch eine Seitendarstellung eines Ausführungsbeispiels für eine erfindungsgemäße Batterieeinheit;
- Fig. 2: in einer schematischen Darstellung einen Schnitt durch eine Frontansicht eines weiteren Ausführungsbeispiels für eine erfindungsgemäße Batterieeinheit;
- Fig. 3: in einer schematischen Darstellung einen Schnitt durch ein weiteres Ausführungsbeispiel für eine erfindungsgemäße Batterieeinheit;
- Fig. 4: in einer schematischen Darstellung einen Schnitt durch ein Ausführungsbeispiel für ein erfindungsgemäßes Batteriemodul;
- Fig. 5: in einer schematischen Darstellung einen Schnitt durch eine Frontansicht eines weiteren Ausführungsbeispiels für eine erfindungsgemäße Batterieeinheit;
- Fig. 6: in einer schematischen Darstellung einen Schnitt durch eine Seitenansicht eines weiteren Ausführungsbeispiels für eine erfindungsgemäße Batterieeinheit;
- Fig. 7: in einer schematischen Darstellung eine Frontansicht eines weiteren Ausführungsbeispiels für eine erfindungsgemäße Batterieeinheit; und
- Fig. 8: in einer schematischen Darstellung ein Ausführungsbeispiel für den Aufbau einer erfindungsgemäßen Batterieeinheit.

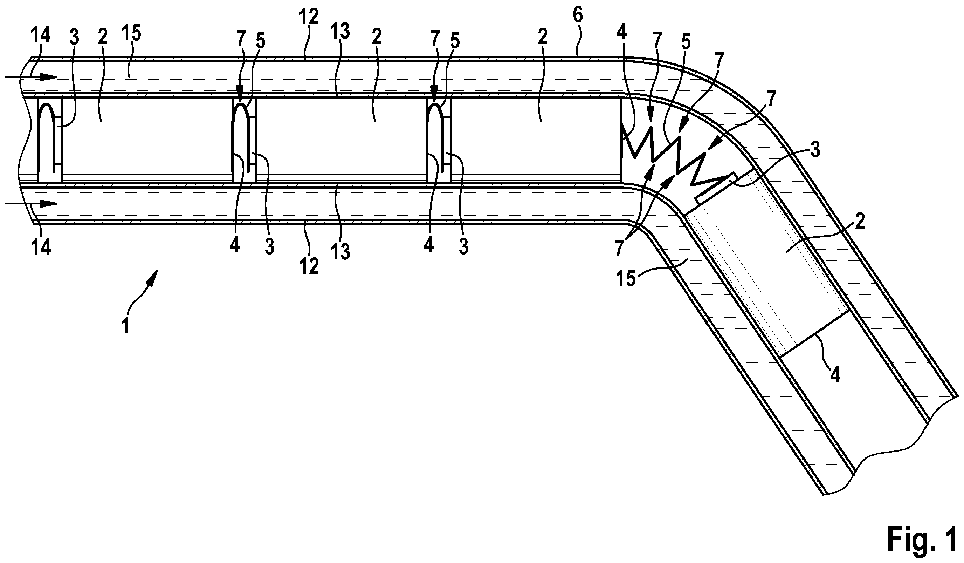

Die in Fig. 1 dargestellte Batterieeinheit 1 umfasst eine Mehrzahl von Batteriezellen 2, welche jeweils eine erste Elektrode 3 und eine zweite Elektrode 4 zur elektrischen Kontaktierung der jeweiligen Batteriezelle 2 aufweisen. Die in Fig. 1 dargestellten Batteriezellen 2 sind in dem Ausführungsbeispiel als Rundzellen ausgebildet, vorzugsweise als Lithium-Ionen-Zellen. Insbesondere sind sogenannte 18650-Zellen als Batteriezellen vorgesehen.

Die Batteriezellen 2 sind dabei über Zellverbinder 5 elektrisch miteinander verschaltet. Dabei kontaktiert jeweils ein Zellverbinder 5 die erste Elektrode 3 einer Batteriezelle 2 und die zweite Elektrode 4 einer weiteren Batteriezelle 2. Die Batteriezellen 2 sind somit elektrisch in Reihe geschaltet. Die miteinander verschalteten Batteriezellen 2 sind von einer die Batteriezellen 2 zusammenhaltenden Außenhülle 6 umgeben. Die Außenhülle 6 ist dabei schlauchartig ausgebildet und aus einem flexiblen Kunststoffmaterial. Die Batteriezellen 2 sind einzeln hintereinander verschaltet, sodass jede einzelne Batteriezelle 2 von der Außenhülle 6 umgeben ist.

Die Zellverbinder 5, welche die Batteriezellen 2 miteinander verschalten, weisen flexibel ausgebildete Abschnitte auf. Diese flexibel ausgebildeten Abschnitte sind bei dem in Fig. 1 dargestellten Ausführungsbeispiel als Sollbiegestellen 7 ausgebildet. An diesen Sollbiegestellen 7 sind die Zellverbinder 5 scharnierartig abknickbar, sodass die Batterieeinheit 1 formbar ist und beispielsweise einen Bogen beschreiben kann, wie in Fig. 1 beispielhaft dargestellt.

Die Außenhülle 6 der in Fig. 1 dargestellten Batterieeinheit 1 weist jeweils eine Außenwandung 12 und eine Innenwandung 13 auf. Zwischen der Innenwandung 13 und der Außenwandung 12 ist dabei ein Kühlmittelleitungskanal ausgebildet, durch welchen ein Kühlmittel 15 strömen kann. Ein Kühlmittelfluss durch den zwischen der Innenwandung 13 und der Außenwandung 12 gebildeten Kühlmittelleitungskanal ist in Fig. 1 durch die Pfeile 14 gekennzeichnet.

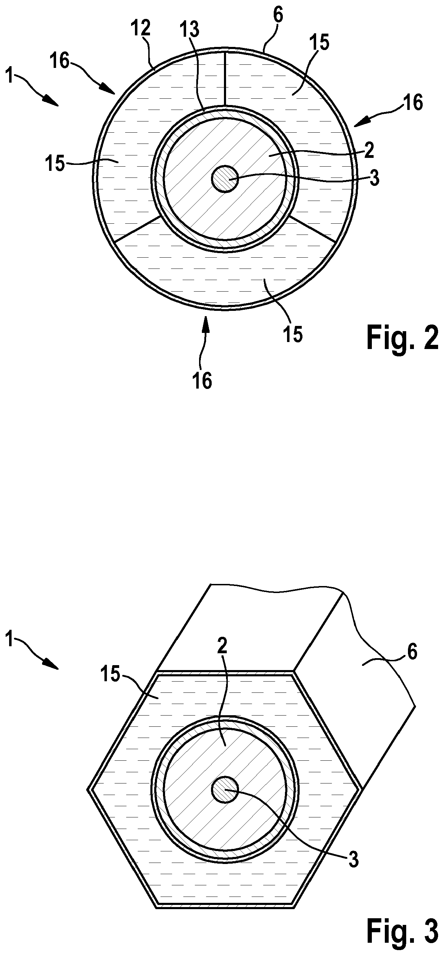

Fig. 2 zeigt ein weiteres Ausführungsbeispiel für eine erfindungsgemäß ausgebildete Batterieeinheit 1. Dabei sind wieder als Rundzellen ausgebildete Batteriezellen 2, welche eine erste Elektrode 3 und eine zweite Elektrode (in Fig. 2 nicht zu sehen) aufweisen, von einer schlauchartig ausgebildeten Außenhülle 6 umgeben. Die Außenhülle 6 weist dabei eine Innenwandung 13 und eine Außenwandung 12 auf, wobei die Innenwandung 13 eine höhere Elastizität aufweist, als die Außenwandung 12, derart, dass die Innenwandung 13 durch den Druck eines zwischen den Wandungen 12, 13 strömenden Kühlmittels 15 gegen die Batteriezellen 2 gepresst wird.

Die Außenhülle 6 der in Fig. 2 dargestellten Batterieeinheit 1 weist ferner drei in Längserstreckungsrichtung der Außenhülle 6 verlaufende Segmente 16 auf, welche als Kühlmittelleitungskanal ausgebildet sind. Dabei ist vorgesehen, dass zwei Kühlmittelleitungskanäle als Kühlmittelhinführung und ein Kühlmittelleitungskanal als Kühlmittelrückführung ausgebildet sind.

Fig. 3 zeigt ein weiteres Ausführungsbeispiel für eine erfindungsgemäß ausgebildete Batterieeinheit 1. Bei diesem Ausführungsbeispiel ist die Außenhülle 6 derart ausgebildet, dass der Umfang der Außenhülle ein gleichmäßiges Sechseck ausbildet. Hierdurch sind vorteilhafterweise mehrerer solcher Batterieeinheiten 1 in einer Wabenstruktur bei hoher Packungsdichte zu einem Batteriemodul anordbar. Die Außenhülle 6 weist dabei vorteilhafterweise wiederum einen Kühlmittelleitungskanal auf, durch welchen ein Kühlmittel 15 strömt.

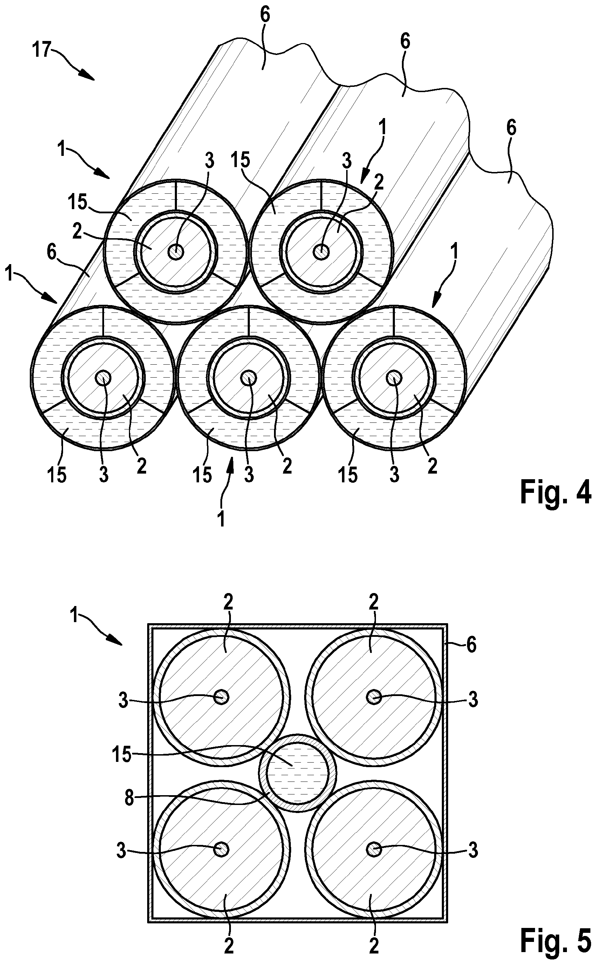

Fig. 4 zeigt ein Ausführungsbeispiel für ein erfindungsgemäß ausgebildetes Batteriemodul 17. Dieses Batteriemodul 17 umfasst fünf Batterieeinheiten 1, welche insbesondere wie im Zusammenhang mit Fig. 1 und Fig. 2 erläutert ausgebildet sein können. Die Batterieeinheiten 1 sind dabei miteinander verschaltet (in Fig. 4 aufgrund der gewählten Schnittdarstellung nicht explizit dargestellt).

In Fig. 5 ist ein weiteres Ausführungsbeispiel für eine erfindungsgemäß ausgebildete Batterieeinheit 1 dargestellt. Bei diesem Ausführungsbeispiel weist die Außenhülle 6 vier schlauchartig ausgebildete Anordnungsräume auf, wobei die Batteriezellen 2 in den Anordnungsräumen angeordnet sind. Die Batteriezellen 2 sind dabei wiederum Rundzellen mit einer ersten Elektrode 3 und einer zweiten Elektrode. Die Batteriezellen 2 sind dabei hintereinander mittels flexibel ausgebildeter Zellverbinder (in Fig. 5 nicht explizit dargestellt) elektrisch in Reihe geschaltet. Zwischen den Anordnungsräumen der Außenhülle 6 weist die Außenhülle 6 darüber hinaus ein Kühlmittelleitungskanal 8 auf, welcher von einem Kühlmittel 15 durchströmt wird.

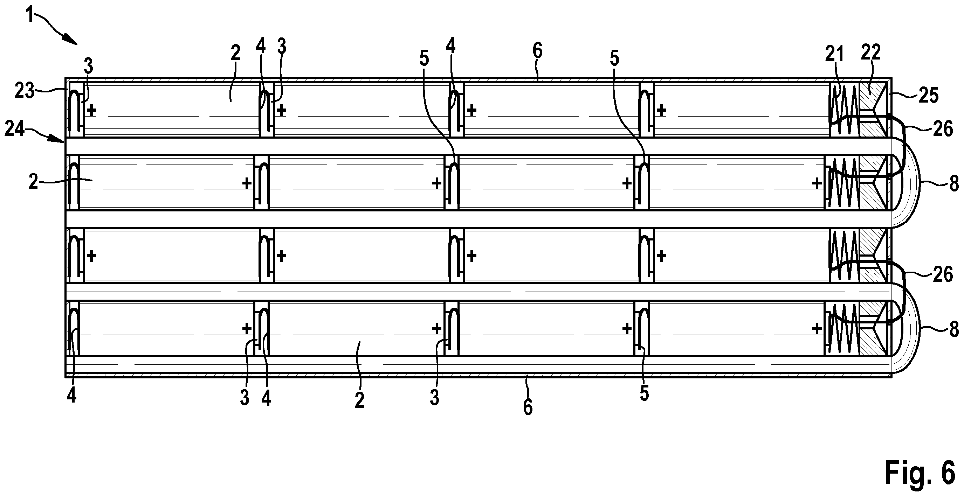

Fig. 6 zeigt ein weiteres Ausführungsbeispiel für eine erfindungsgemäß ausgebildete Batterieeinheit 1. Die Batterieeinheit umfasst dabei mehrere als Rundzellen ausgebildete Batteriezellen 2. Die Batteriezellen 2 weisen jeweils an einander gegenüberliegenden Enden eine erste Elektrode 3 und eine zweite Elektrode 4 auf. Die Batteriezellen 2 sind dabei von einer flexibel ausgebildeten Außenhülle 6 umgeben. Die Außenhülle 6 weist dabei mehrere Anordnungsräume auf, in welchen die Batteriezellen 2 hintereinander angeordnet sind. Die Außenhülle 6 liegt dabei direkt an den Batteriezellen 2 an und hält dabei die Batteriezellen 2 zusammen.

Die Batteriezellen 2 sind dabei mittels Zellverbinder 5 elektrisch in Reihe geschaltet. Die Zellverbinder 5 sind dabei zumindest teilweise flexibel ausgebildet, sodass die relative Anordnung der Batteriezellen 2 zueinander, insbesondere der Winkel zwischen zwei hintereinander angeordneten Batteriezellen 2, verändert werden kann, wenn eine entsprechende Verformungskraft auf die Batterieeinheit 1 aufgebracht wird.

Die Außenhülle 6 der in Fig. 6 dargestellten Batterieeinheit 1 umfasst ferner Kühlmittelleitungskanäle 8, welche von einem Kühlmittel 15 zur Temperierung der Batteriezelle durchströmt werden können.

In der vorderen Wandung 23 (in Fig. 6 links dargestellt) der Außenhülle 6 sind dabei Öffnungen 24 vorgesehen, über welche die Batterieeinheit 1 mit einem Kühlsystem verbunden werden kann. Darüber hinaus sind in der vorderen Wandung elektrisch leitfähige Leitungen (in Fig. 6 nicht explizit dargestellt) angeordnet, über welche die Batteriezellen 2 weiter miteinander verschaltet sind.

An der hinteren Wandung 25 der Außenhülle 6 umfasst die Batterieeinheit 1 an Stützelementen 22 angeordnete Federelemente 21 welche die Batteriezellen 2 beweglich fixieren. Die Federelemente 21 lassen dabei ein bogenförmiges Formen der Batterieeinheit 1 zu.

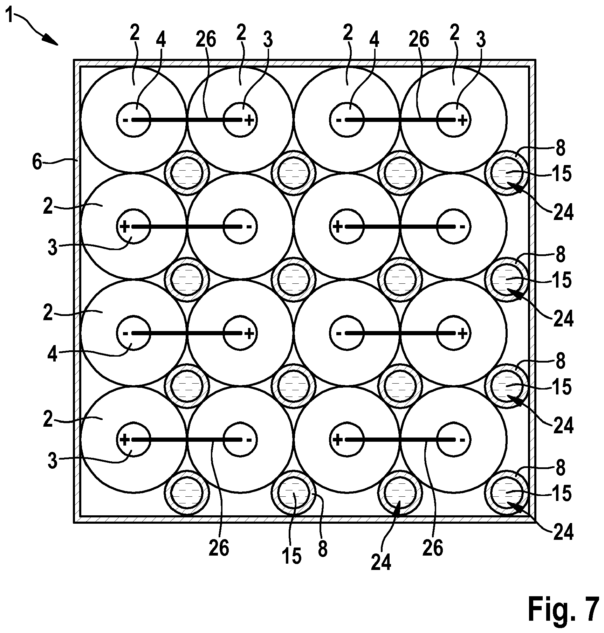

Fig. 7 zeigt eine Frontansicht auf die vordere Wandung eines ähnlich wie in Fig. 6 dargestellten Ausführungsbeispiels. Dabei ist schematisch dargestellt, wie die Batteriezellen 2 der Batterieeinheit 1 über elektrisch leitfähige Leitungen 26 miteinander verschaltet sind. Darüber hinaus sind die Öffnungen 24 der Kühlkanäle 8 zu sehen, über welche die Batterieeinheit 1 mit einem Kühlsystem verbunden werden kann.

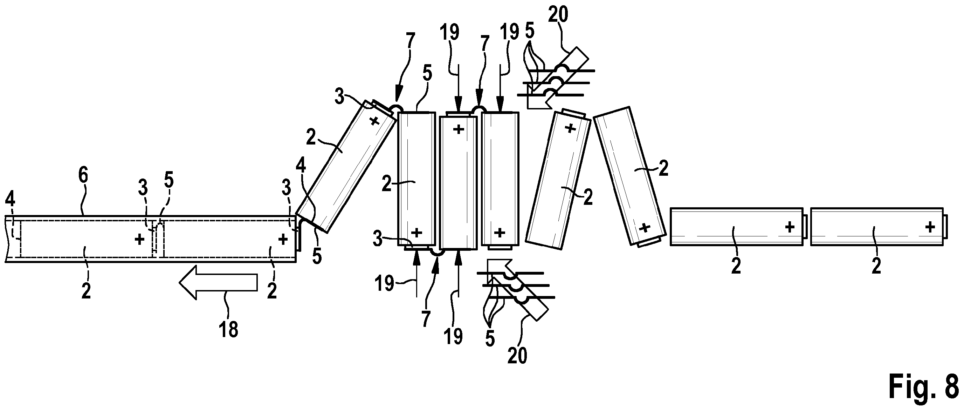

Fig. 8 zeigt ein Ausführungsbeispiel dafür, wie eine erfindungsgemäß ausgebildete Batterieeinheit aufgebaut werden kann. Dazu werden als Rundzellen ausgebildete Batteriezellen 2, welche an einander gegenüberliegenden Enden eine erste Elektrode 3 und eine zweite Elektrode 4 aufweisen über Zellverbinder 5 elektrisch in Reihe geschaltet. Die Zellverbinder 5 werden dabei an den Batteriezellen 2 angeordnet, wie durch die Pfeile 20 schematisch dargestellt. Dann werden die Zellverbinder 5 jeweils an einer ersten Elektrode 3 und einer zweiten Elektrode 4 von zwei Batteriezellen 2 angeschweißt, wie durch die Pfeile 19 schematisch dargestellt. Insbesondere ist vorgesehen, dass die Zellverbinder 5 mittels eines Punktschweißverfahrens an den Elektroden 3, 4 angeschweißt werden. Die Zellverbinder 5 sind zumindest teilweise flexibel ausgebildet, indem die Zellverbinder 5 eine Sollbiegestelle 7 aufweisen, um welche ein Zellverbinder 5 verschwenkbar ist.

Die über einen Zellverbinder 5 miteinander verbundenen Batteriezellen 2 werden dann in eine schlauchartig ausgebildete Außenhülle 6 eingebracht, wie durch den Pfeil 18 schematisch dargestellt. Die Außenhülle 6 ist dabei vorzugsweise aus einem flexibel ausgebildeten Kunststoffmaterial.

Sind sämtliche Batteriezellen 2 über Zellverbinder 5 miteinander verschaltet und in die Außenhülle 6 eingebracht, ist eine erfindungsgemäße Batterieeinheit fertiggestellt. Dadurch, dass die Außenhülle 6 flexibel ausgebildet ist und die Zellverbinder 5 eine Sollbiegestelle 7 aufweisen, ist die Batterieeinheit vorteilhafterweise formbar ausgebildet, sodass die Batterieeinheit vorteilhafterweise an verwinkelte Einbauräume angepasst werden kann.

Die in den Figuren dargestellten und im Zusammenhang mit diesen erläuterten Ausführungsbeispiele dienen der Erläuterung der Erfindung und sind für diese nicht beschränkend.

## Patentansprüche

1. Batterieeinheit (1) umfassend eine Mehrzahl von Batteriezellen (2) mit jeweils einer ersten Elektrode (3) und einer zweiten Elektrode (4) zur elektrischen Kontaktierung der jeweiligen Batteriezelle (2), wobei die Batteriezellen (2) über Zellverbinder (5) elektrisch miteinander verschaltet sind und die miteinander verschalteten Batteriezellen (2) von einer die Batteriezellen (2) zusammenhaltenden Außenhülle (6) umgeben sind, wobei die Zellverbinder (5) zumindest einen flexibel ausgebildeten Abschnitt aufweisen und die Außenhülle (6) zumindest teilweise flexibel ausgebildet ist, derart, dass die Batterieeinheit (1) durch eine Veränderung einer relativen Anordnung der Batteriezellen (2) zueinander formbar ist,
**dadurch gekennzeichnet, dass,**
die Außenhülle (6) wenigstens einen Kühlmittelleitungskanal (8) aufweist und die Außenhülle (6) eine Außenwandung (12) und eine Innenwandung (13) aufweist, wobei die Innenwandung (13) eine höhere Elastizität aufweist als die Außenwandung (12), derart, dass die Innenwandung (13) durch den Druck eines zwischen den Wandungen (12, 13) strömenden Kühlmittels (15) gegen die Batteriezellen (2) gepresst wird.

2. Batterieeinheit (1) nach Anspruch 1, **dadurch gekennzeichnet, dass** die Zellverbinder (5) wenigstens eine Sollbiegestelle (7) als den zumindest einen flexiblen Abschnitt aufweisen.

3. Batterieeinheit (1) nach einem der vorhergehenden Ansprüche, **dadurch gekennzeichnet, dass** die Außenhülle (6) schlauchartig ausgebildet ist.

4. Batterieeinheit (1) nach einem der vorhergehenden Ansprüche, **dadurch gekennzeichnet, dass** die Batteriezellen (2) als Rundzellen ausgebildet sind, wobei die erste Elektrode (3) und die zweite Elektrode (4) jeweils an einander gegenüberliegenden Enden der Rundzelle angeordnet sind.

5. Batterieeinheit (1) nach einem der vorhergehenden Ansprüche, **dadurch gekennzeichnet, dass** die Batteriezellen (2) jeweils einzeln hintereinandergeschaltet sind.

6. Batterieeinheit (1) nach einem der vorhergehenden Ansprüche, **dadurch gekennzeichne**t, dass die Außenhülle (6) wenigstens zwei in Längserstreckungsrichtung verlaufende Segmente (16) aufweist, welche als Kühlmittelleitungskanal ausgebildet sind, wobei wenigstens ein erster Kühlmittelleitungskanal als Kühlmittelhinführung und wenigstens ein zweiter Kühlmittelleitungskanal als Kühlmittelrückführung ausgebildet ist.

7. Batterieeinheit (1) nach einem der vorhergehenden Ansprüche, **dadurch gekennzeichnet, dass** die Außenhülle (6) mehrere Anordnungsräume aufweist, wobei die Batteriezellen (2) in den Anordnungsräumen angeordnet sind.

8. Batteriemodul (17) mit einer Mehrzahl von elektrisch miteinander verschalteten Batterieeinheiten (1), **dadurch gekennzeichnet, dass** die Batterieeinheiten (1) als Batterieeinheit nach einem der Ansprüche 1 bis 7 ausgebildet sind.

## Claims

1. Battery unit (1) comprising a plurality of battery cells (2), in each case having a first electrode (3) and a second electrode (4) for electrical contact to be made with the respective battery cell (2), wherein the battery cells (2) are electrically interconnected by means of cell connectors (5) and the interconnected battery cells (2) are surrounded by an outer sheath (6) which holds the battery cells (2) together, wherein the cell connectors (5) have at least one section of flexible design and the outer sheath (6) is of at least partially flexible design in such a way that the battery unit (1) can be shaped by changing a relative arrangement of the battery cells (2) in relation to one another,
**characterized in that**
the outer sheath (6) has at least one coolant line duct (8) and the outer sheath (6) has an outer wall (12) and an inner wall (13), wherein the inner wall (13) has a higher degree of elasticity than the outer wall (12) in such a way that the inner wall (13) is pressed against the battery cells (2) by the pressure of a coolant (15) flowing between the walls (12, 13).

2. Battery unit (1) according to Claim 1, **characterized in that** the cell connectors (5) have at least one predetermined bending point (7) as the at least one flexible section.

3. Battery unit (1) according to either of the preceding claims, **characterized in that** the outer sheath (6) is of hose-like design.

4. Battery unit (1) according to one of the preceding claims, **characterized in that** the battery cells (2) are designed as round cells, wherein the first electrode (3) and the second electrode (4) are in each case arranged at opposite ends to one another of the round cell.

5. Battery unit (1) according to one of the preceding claims, **characterized in that** the battery cells (2) are in each case individually connected in series.

6. Battery unit (1) according to one of the preceding claims, **characterized in that** the outer sheath (6) has at least two segments (16) which run in the direction of longitudinal extent and are designed as coolant line ducts, wherein at least one first coolant line duct is designed as a coolant supply and at least one second coolant line duct is designed as a coolant return.

7. Battery unit (1) according to one of the preceding claims, **characterized in that** the outer sheath (6) has a plurality of arrangement chambers, wherein the battery cells (2) are arranged in the arrangement chambers.

8. Battery module (17) comprising a plurality of electrically interconnected battery units (1), **characterized in that** the battery units (1) are designed as a battery unit according to one of Claims 1 to 7.

## Revendications

1. Unité de batterie (1) comprenant une pluralité de cellules de batterie (2) dotées respectivement d'une première électrode (3) et d'une deuxième électrode (4) servant à la mise en contact électrique de la cellule de batterie (2) respective, les cellules de batterie (2) étant connectées électriquement entre elles par le biais de connecteurs de cellule (5) et les cellules de batterie (2) connectées entre elles étant entourées par une enveloppe externe (6) qui maintient les cellules de batterie (2) ensemble, les connecteurs de cellule (5) possédant au moins une portion réalisée flexible et l'enveloppe externe (6) étant réalisée au moins partiellement flexible de sorte que l'unité de batterie (1) peut être façonnée en modifiant la disposition des cellules de batterie (2) les unes par rapport aux autres,
**caractérisée en ce que**
l'enveloppe externe (6) possède au moins un canal de conduite de fluide de refroidissement (8) et l'enveloppe externe (6) possède une paroi extérieure (12) et une paroi intérieure (13), la paroi intérieure (13) possédant une élasticité supérieure à celle de la paroi extérieure (12), de sorte que la paroi intérieure (13) est pressée contre les cellules de batterie (2) par la pression du fluide de refroidissement (15) qui s'écoule entre les parois (12, 13).

2. Unité de batterie (1) selon la revendication 1, **caractérisée en ce que** les connecteurs de cellule (5) possèdent au moins un point de flexion voulu (7) au niveau de l'au moins une portion flexible.

3. Unité de batterie (1) selon l'une des revendications précédentes, **caractérisée en ce que** l'enveloppe externe (6) est configurée à la manière d'un boyau.

4. Unité de batterie (1) selon l'une des revendications précédentes, **caractérisée en ce que** les cellules de batterie (2) sont réalisées sous la forme de cellules rondes, la première électrode (3) et la deuxième électrode (4) étant respectivement disposées au niveau d'extrémités mutuellement opposées de la cellule ronde.

5. Unité de batterie (1) selon l'une des revendications précédentes, **caractérisée en ce que** les cellules de batterie (2) sont respectivement commutées les unes derrière les autres.

6. Unité de batterie (1) selon l'une des revendications précédentes, **caractérisée en ce que** l'enveloppe externe (6) possède au moins deux segments (16) qui s'étendent dans le sens de la projection longitudinale, lesquels sont réalisés sous la forme de canaux de conduite de fluide de refroidissement, au moins un premier canal de conduite de fluide de refroidissement étant configuré en tant qu'arrivée de fluide de refroidissement et au moins un deuxième canal de conduite de fluide de refroidissement en tant que retour de fluide de refroidissement.

7. Unité de batterie (1) selon l'une des revendications précédentes, **caractérisée en ce que** l'enveloppe externe (6) possède plusieurs espaces d'arrangement, les cellules de batterie (2) étant disposées dans les espaces d'arrangement.

8. Module de batterie (17) comprenant une pluralité d'unités de batterie (1) connectées les unes aux autres, **caractérisé en ce que** les unités de batterie (1) sont réalisées sous la forme d'unités de batterie (1) selon l'une des revendications 1 à 7.
